**Europäisches Patentamt**

**European Patent Office**

**Office européen des brevets**

(19)

(11) Veröffentlichungsnummer: **0 021 047**
**B1**

(12)

# EUROPÄISCHE PATENTSCHRIFT

(45) Veröffentlichungstag der Patentschrift:
**27.12.84**

(51) Int. Cl.³: **G 03 B 21/56, F 16 M 11/38**

(21) Anmeldenummer: **80102833.3**

(22) Anmeldetag: **21.05.80**

(54) **Stativ für Projektionsleinwände.**

(30) Priorität: **30.05.79 DE 2922027**

(43) Veröffentlichungstag der Anmeldung:
**07.01.81 Patentblatt 81/1**

(45) Bekanntmachung des Hinweises auf die Patenterteilung:
**27.12.84 Patentblatt 84/52**

(84) Benannte Vertragsstaaten:
**AT BE CH DE FR GB IT LI LU NL SE**

(56) Entgegenhaltungen:
**CH - A - 19 053**
**FR - A - 972 761**
**FR - A - 2 063 267**
**US - A - 2 502 667**
**US - A - 3 214 121**

(73) Patentinhaber: **MECHANISCHE WEBEREI GMBH,**
**Neuhäuserweg 2, D-4792 Bad Lippspringe (DE)**

(72) Erfinder: **Meinunger, Helmut, Froweinstrasse 26,**
**D-5608 Radevormwald (DE)**

(74) Vertreter: **Schaefer, Gerhard, Dr., Seitnerstrasse 13,**
**D-8023 Pullach (DE)**

## Beschreibung

Die Erfindung betrifft ein Stativ für Projektionsleinwände mit einem Standrohr sowie abspreizbaren Stativbeinen, die in einem auf dem Standrohr verschiebbaren Befestigungskörper schwenkbar gelagert und in radial zum Standrohr verlaufenden schlitzartigen Öffnungen eines Führungskörpers geführt sind, der am unteren Ende des Standrohrs befestigt ist.

Bei bekannten Stativen dieser Art musste zur Erhöhung der Stabilität, insbesondere bei stärkerer Abspreizung der Stativbeine, ein zusätzliches Führungselement vorgesehen werden (US-A-2 502 667; FR-A-2 063 267). Dies machte eine aufwendige Konstruktion erforderlich.

Der Erfindung liegt die Aufgabe zugrunde, unter Wahrung der Stabilität des Führungskörpers eine grössere Abspreizbarkeit der Stativbeine zu ermöglichen. Dies wird dadurch erreicht, dass der Führungskörper an der Oberseite eine zentrale Ausnehmung aufweist, in die der Befestigungskörper einschiebbar ist und die schlitzartigen Öffnungen sich bis zu den vorzugsweise senkrechten Randteilen des Führungskörpers erstrecken.

Durch die Versenkbarkeit des Befestigungskörpers wird bei Wahrung der Stabilität des Führungskörpers eine grössere Abspreizbarkeit der Stativbeine erreicht.

Gemäss einer Weiterbildung der Erfindung ist der Führungskörper kappenartig ausgebildet und auf dem unteren Ende des Standrohrs befestigt. Weiterhin kann der Befestigungskörper mit einer Vorrichtung zur Arretierung in beiden Endstellungen versehen sein. Hierzu kann der Befestigungskörper einen sich nach oben erstreckenden zylindrischen Kragen aufweisen, welcher mit einem federnden Element versehen ist, dessen Nase mit je einer Ausnehmung am Standrohr in beiden Einstellungen in Eingriff bringbar ist. Das federnde Element kann hierbei an den Kragen angeformt sein.

Gemäss einer Weiterbildung der Erfindung ist das Standrohr mit einem Längsschlitz versehen, in dem ein nach innen gerichteter Vorsprung des Kragens verschiebbar ist.

Gemäss einer besonders vorteilhaften Ausbildung der Erfindung kann zwischen Befestigungskörper und Führungskörper eine Feder angeordnet sein, die innerhalb des Standrohrs verlaufen kann, und mit ihrem einen Ende am Führungskörper und mit ihrem anderen Ende an einem mit dem Befestigungskörper verbundenen Bügel befestigt sein, der durch den Längsschlitz in das Standrohr hineinragt. Diese Feder bewirkt ein automatisches Abspreizen der Stativbeine, wenn die Nase des federnden Elements aus der entsprechenden Ausnehmung im Standrohr herausgezogen wird.

Weitere Einzelheiten und Vorteile der Erfindung können dem in der Zeichnung dargestellten Ausführungsbeispiel entnommen werden. Es zeigen:

Fig. 1 eine Ansicht des erfindungsgemässen Stativs im Bereich der Stativbeine in zusammengeklappter Stellung;

Fig. 2 einen Längsschnitt durch das erfindungsgemässe Stativ im unteren Bereich der abgespreizten Stativbeine.

Das erfindungsgemässe Stativ weist in bekannter Weise ein Standrohr 1 auf, das in seinem oberen Teil vorzugsweise teleskopartig ausziehbar ist. Auf dem Standrohr 1 ist ein Befestigungskörper 2 verschiebbar, an dem mittels Achsbolzen 3 abspreizbare Stativbeine 4 befestigt sind.

Erfindungsgemäss ist am unteren Ende des Standrohrs 1 ein Führungskörper 5 befestigt, der an seiner Unterseite mit Öffnungen 6 für den Durchtritt der Stativbeine 4 versehen ist. Diese Öffnungen 6 sind radial nach aussen verlaufende Längsschlitze, die so ausgebildet sind, dass ihre Breite der Breite der Stativbeine 4 entspricht und ihre Länge etwas grösser ist als die senkrechte Projektion der schräggestellten Stativbeine 4 in abgespreiztem Zustand. Die Öffnungen 7 im oberen Teil des Führungskörpers 5 können sich – ausgehend von einer zentralen, ringförmigen Ausnehmung 8 für die Aufnahme des Befestigungskörpers 2 – radial nach aussen bis zu dem etwa senkrecht verlaufenden Randteil 5C des Führungskörpers erstrecken.

Am unteren Ende ist der Führungskörper 5 kappenartig ausgebildet und von unten her auf das Standrohr 1 aufgeschoben. Er kann dort mit einem Stift 17 oder in anderer Weise befestigt sein. Der Führungskörper 5 hat im Grundriss die Form eines Dreiecks mit abgerundeten Ecken. Die Öffnungen für den Durchtritt der Stativbeine 4 erstrecken sich in Richtung dieser Ecken.

Der Befestigungskörper 2 ist am oberen Rand mit einem zylindrischen Kragen 2A versehen, der das Standrohr 1 umfasst. In diesem Kragen 2A ist ein federndes Element 9 angeordnet, das mit einer Nase 9A versehen ist. Die Nase 9A ist mit einer Ausnehmung 10A im Standrohr 1 bei abgespreizter Stellung der Stativbeine 4 bzw. mit einer Ausnehmung 10B bei angeklappter Stellung der Stativbeine 4 in Eingriff bringbar. In der dargestellten Ausführungsform ist das federnde Element 9 als Zunge an den Kragen 2A angeformt. Dies ist insbesondere bei Herstellung des Befestigungskörpers 2 aus Kunststoff in einfacher Weise möglich. Um die Verschiebung des Befestigungskörpers 2 in seinen beiden Endstellungen zu erleichtern, ist in diesem Bereich ausserdem eine Betätigungslasche 11 angeformt.

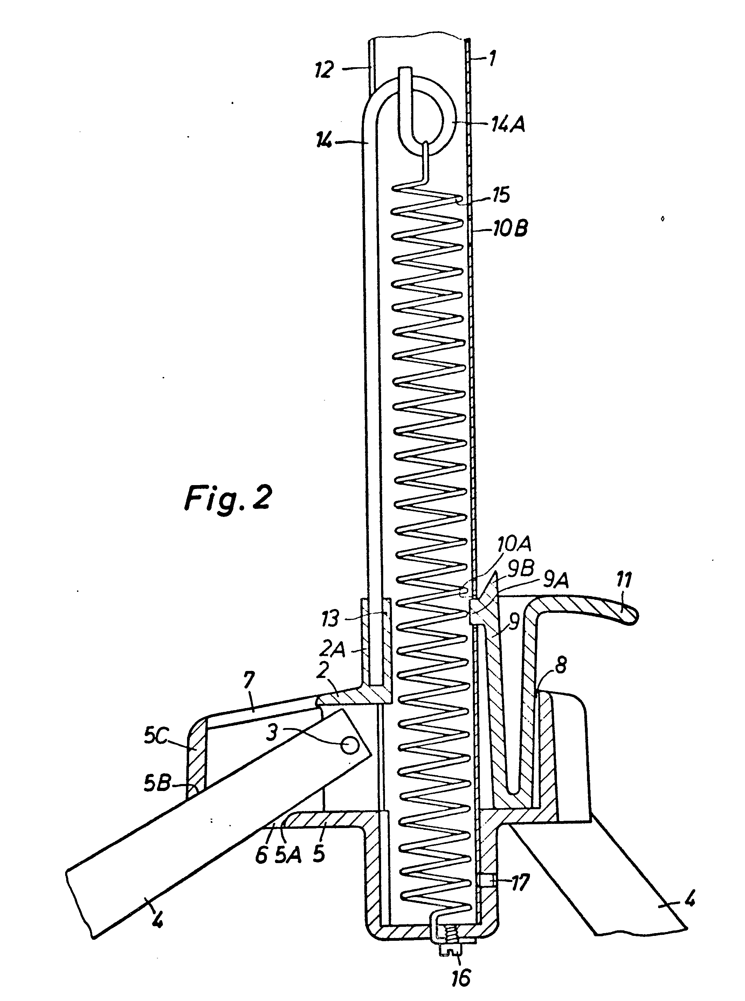

Das Standrohr 1 weist auf der den Ausnehmungen 10A und 10B entgegengesetzten Seite einen Längsschlitz 12 auf, in dem ein Ansatz 13 des Befestigungskörpers 2 verschiebbar ist und der den Befestigungskörper 2 gegen Verdrehung sichert. Gemäss der in Fig. 2 dargestellten Ausführungsform ist am Befestigungskörper 2 ein Bügel 14 befestigt, der mit seinem oberen Ende 14A durch den Längsschlitz 12 in das Innere des Standrohrs 1 reicht. An dem dort gebildeten Haken 14A ist eine Zugfeder 15 befestigt, deren anderes Ende mittels einer Schraube 16 am unteren Ende des Führungskörpers 5 befestigt ist. Diese Zugfeder 15 bringt den Befestigungskörper 2 automatisch in seine obere Endlage, wenn die Nase 9A des als Verriegelungsvorrichtung dienenden federnden Elements 9 aus der Ausnehmung 10A herausgezogen wird. Damit werden die Stativbeine 4 automatisch in ihre angelegte Stellung gebracht. Falls jedoch der untere Teil des Standrohrs 1 aus Platzgründen benötigt wird, um den (nicht dargestellten) teleskopartig ausziehbaren oberen Teil des Standrohrs aufzunehmen, kann die Zugfeder entfallen. Der Befestigungskörper muss dann von Hand in seine Ruhelage geschoben werden.

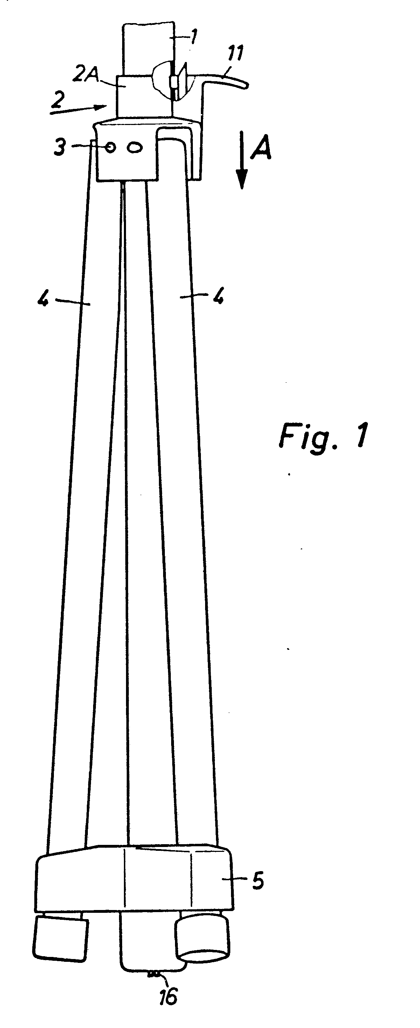

Die Betätigung des erfindungsgemässen Stativs wird im folgenden, ausgehend von der in Fig. 1 dargestellten, zusammengeklappten Stellung, beschrieben. Hierzu wird zunächst das federnde Element 9 mit dem Ansatz 9B nach aussen gezogen, so dass die Nase 9A nicht mehr in Eingriff mit der entsprechenden Ausnehmung 10B im Standrohr 1 ist. Wird, wie in Fig. 1 dargestellt, keine Feder verwendet, so muss der Befestigungskörper 2 manuell in diese Lage verschoben werden. Durch Verschieben des Befestigungskörpers 2 mit Hilfe der Lasche 11 in Richtung des Pfeils A nach unten laufen die Innenkanten der Stativbeine 4 auf den Kanten 5A des Führungskörpers 5 und werden dadurch nach aussen abgespreizt. Nach dem Einrasten der Nase 9A in die Ausnehmung 10A kann das Stativ auf dem Boden aufgestellt werden. Die Stativbeine 4 ruhen dann auf den Kanten 5B der Randteile 5C des Führungskörpers 5.

Das Zusammenklappen des Stativs erfolgt entsprechend. Nach Herausziehen der Nase 9A aus der Ausnehmung 10B wird der Befestigungskörper 2 durch die Kraft der Feder 15 automatisch in die in Fig. 2 dargestellte Stellung gezogen, in der dann die Nase 9A in die Ausnehmung 10A einrastet.

**Patentansprüche**

1. Stativ für Projektionsleinwände mit einem Standrohr (1) sowie abspreizbaren Stativbeinen (4), die in einem auf dem Standrohr verschiebbaren Befestigungskörper (2) schwenkbar gelagert und in radial zum Standrohr verlaufenden schlitzartigen Öffnungen (7) eines Führungskörpers (5) geführt sind, der am unteren Ende des Standrohrs befestigt ist, dadurch gekennzeichnet, dass der Führungskörper (5) an der Oberseite eine zentrale Ausnehmung (8) aufweist, in die der Befestigungskörper (2) einschiebbar ist und die schlitzartigen Öffnungen (7) sich bis zu den vorzugsweise senkrechten Randteilen (5c) des Führungskörpers erstrecken.

2. Stativ nach Anspruch 1, dadurch gekennzeichnet, dass der Führungskörper (5) kappenartig ausgebildet und auf dem unteren Ende des Standrohrs (1) befestigt ist.

3. Stativ nach einem der vorhergehenden Ansprüche, dadurch gekennzeichnet, dass der Befestigungskörper (2) mit einer Vorrichtung zur Arretierung am Standrohr (1) in den beiden Endstellungen versehen ist.

4. Stativ nach Anspruch 3, dadurch gekennzeichnet, dass der Befestigungskörper (2) einen sich nach oben erstreckenden zylindrischen Kragen (2A) aufweist, welcher mit einem federnden Element (9) versehen ist, dessen Nase (9A) mit je einer Ausnehmung (10A, 10B) im Standrohr (1) in den beiden Endstellungen in Eingriff bringbar ist.

5. Stativ nach Anspruch 4, dadurch gekennzeichnet, dass das federnde Teil (9) an den Kragen (2A) angeformt ist.

6. Stativ nach Anspruch 4 oder 5, dadurch gekennzeichnet, dass das Standrohr (1) mit einem Längsschlitz (12) versehen ist, in dem zur Sicherung des Befestigungskörpers (2) gegen Verdrehung ein nach innen gerichteter Vorsprung (13) des Kragens (2A) verschiebbar ist.

7. Stativ nach einem der vorhergehenden Ansprüche, dadurch gekennzeichnet, dass zwischen Befestigungskörper (2) und Führungskörper (5) eine Feder (15) angeordnet ist.

8. Stativ nach Anspruch 7, dadurch gekennzeichnet, dass innerhalb des Standrohrs (1) eine Zugfeder (15) angeordnet ist, die mit ihrem einen Ende am Führungskörper (5) und mit ihrem anderen Ende an einem mit dem Befestigungskörper (2) verbundenen Bügel (14) befestigt ist, der durch den Längsschlitz (12) in das Standrohr (1) hineinragt.

**Claims**

1. Stand for projection screens, having an upright tube (1) and stand legs (4) which can be spread apart and which are pivotably mounted in a fixing body (2) displaceable on the stand tube and are guided in slot-like openings (7), extending radially relative to the stand tube, of a guide body (5) which is fixed to the lower end of the stand tube, characterised in that the guide body (5) has on the top a central recess (8), into which the fixing body (2) can be inserted, and the slot-like openings (7) extend up to the preferably vertical rim parts (5c) of the guide body.

2. Stand according to Claim 1, characterised in that the guide body (5) is made in the form of a cap and is fixed to the lower end of the stand tube (1).

3. Stand according to one of the preceding claims, characterised in that the fixing body (2) is provided with a device for locking on the stand tube (1) in the two end positions.

4. Stand according to Claim 3, characterised in that the fixing body (2) has an upward-extending cylindrical collar (2A) which is provided with a resilient element (9), the nose (9A) of which can engage in each case with a recess (10A, 10B) in the stand tube (1) in the two end positions.

5. Stand according to Claim 4, characterised in that the resilient part (9) is formed on the collar (2A).

6. Stand according to Claim 4 or 5, characterised in that the stand tube (1) is provided with a longitudinal slot (12), in which an inward-pointing projection (13) of the collar (2a) is displaceable, for securing the fixing body (2) against rotation.

7. Stand according to one of the preceding claims, characterised in that a spring (15) is located between the fixing body (2) and the guide body (5).

8. Stand according to Claim 7, characterised in that, inside the stand tube (1), a tension spring (15) is located, of which one end is fixed to the guide body (5) and the other end is fixed to a bracket (14) which is joined to the fixing body (2) and which projects through the longitudinal slot (12) into the stand tube (1).

**Revendications**

1. Trépied pour écrans de projection comportant un tube de support (1) ainsi que des jambes de trépied repliables (4) qui sont logées, de façon articulées, dans un corps de fixation (2) télescopable sur le tube de support et qui sont guidées dans des ouvertures (7) d'un corps de guidage (5), en forme de rainures s'étendant radialement par rapport au tube support, ce corps de guidage étant fixé à sa partie inférieure au tube de support, caractérisé en ce que le corps de guidage (5) comporte, du côté haut, une cavité centrale (8) dans laquelle le corps de fixation (2) est susceptible d'être glissé et en ce que les ouvertures (7), en forme de rainures, s'étendent jusqu'aux parties périphériques (5c), avantageusement transversales au corps de guidage.

2. Trépied selon la revendication 1, caractérisé en ce que le corps de guidage (5) présente la forme d'une calotte et est fixé à la partie inférieure du tube support (1).

3. Trépied selon l'une des revendications précédentes, caractérisé en ce que le corps de fixation (2) est muni d'un dispositif d'arrêt du tube support (1) dans ses deux positions extrêmes.

4. Trépied selon la revendication 3, caractérisé en ce que le corps de fixation (2) comporte une collerette (2A) s'étendant vers le haut et munie d'un organe élastique (9) dont le nez (9A) peut être amené en contact dans les deux positions extrêmes avec une cavité correspondante (10A, 10B) du tube de support (1).

5. Trépied selon la revendication 4, caractérisé en ce que la partie élastique (9) est formée dans la collerette (2A) elle-même.

6. Trépied selon la revendication 4 ou 5, caractérisé en ce que le tube support (1) est muni d'une fente longitudinale (12) dans laquelle est susceptible de se glisser un prolongement (13) de la collerette (2A), en vue d'empêcher la rotation du corps de fixation (2).

7. Trépied selon l'une des revendications précédentes, caractérisé en ce qu'un ressort (15) est interposé entre le corps de fixation (2) et le corps de guidage (5).

8. Trépied selon la revendication 7, caractérisé en ce qu'un ressort de traction (15) est disposé à l'intérieur du tube de support (1), ce ressort étant fixé, à l'une de ses extrémités au corps de guidage (5), et à son autre extrémité à un crochet en arceau (14) relié au corps de fixation (2) et qui fait saillie à l'intérieur du tube de support (1), à travers la fente longitudinale (12).

Fig. 1

Fig. 2